(19) **Europäisches Patentamt**

**European Patent Office**

**Office européen des brevets**

(11) **EP 1 231 664 B1**

(12) **EUROPEAN PATENT SPECIFICATION**

(45) Date of publication and mention
of the grant of the patent:
**14.12.2005 Bulletin 2005/50**

(21) Application number: **02075105.3**

(22) Date of filing: **14.01.2002**

(51) Int Cl.⁷: **H01M 8/06**, H01M 8/12,
B01J 8/02, B01J 12/00,
C01B 3/32

(54) **Temperature/reaction management system for fuel reformer systems**

Temperatur- und Umsatzkontrollsystem für Brennstoffreformer

Système de côntrole du température et des conditions de réaction dans un réformeur de carburant

(84) Designated Contracting States:
**DE FR GB**

(30) Priority: **13.02.2001 US 782585**

(43) Date of publication of application:
**14.08.2002 Bulletin 2002/33**

(73) Proprietor: **Delphi Technologies, Inc.**
**Troy, MI 48007 (US)**

(72) Inventor: **Grieve, Malcolm James**
**Fairport, NY 14450 (US)**

(74) Representative: **Denton, Michael John et al**
**Delphi European Headquarters,**
**64 avenue de la Plaine de France,**
**Paris Nord II,**
**BP 60059, Tremblay-en-France**
**95972 Roissy Charles de Gaulle Cédex (FR)**

(56) References cited:
**EP-A- 0 924 786        WO-A-00/29092**
**WO-A-00/31816        WO-A-01/16022**
**WO-A-02/090251        US-A- 5 019 463**
**US-A- 5 733 675**

**Description**

TECHNICAL FIELD

This disclosure relates to the energy conversion devices, and, more particularly, relates to fuel reformer systems for energy conversion devices.

BACKGROUND

Alternative transportation fuels have been represented as enablers to reduce toxic emissions in comparison to those generated by conventional fuels. At the same time, tighter emission standards and significant innovation in catalyst formulations and engine controls has led to dramatic improvements in the low emission performance and robustness of gasoline and diesel engine systems. This has certainly reduced the environmental differential between optimized conventional and alternative fuel vehicle systems. However, many technical challenges remain to make the conventionally fueled internal combustion engine a nearly zero emission system having the efficiency necessary to make the vehicle commercially viable.

Alternative fuels cover a wide spectrum of potential environmental benefits, ranging from incremental toxic and carbon dioxide ($CO_2$) emission improvements (reformulated gasoline, alcohols, etc.) to significant toxic and $CO_2$ emission improvements (natural gas, etc.). Hydrogen has the potential as a nearly emission free internal combustion engine fuel (including $CO_2$ if it comes from a non-fossil source).

The automotive industry has made very significant progress in reducing automotive emissions. This has resulted in some added cost and complexity of engine management systems, yet those costs are offset by other advantages of computer controls: increased power density, fuel efficiency, drivability, reliability and real-time diagnostics.

Future initiatives to require zero emission vehicles appear to be taking us into a new regulatory paradigm where asymptotically smaller environmental benefits come at a very large incremental cost. Yet, even an "ultra low emission" certified vehicle can emit high emissions in limited extreme ambient and operating conditions or with failed or degraded components.

One approach to addressing the issue of emissions is the employment of fuel cells, particularly solid oxide fuel cells (SOFC), in an automobile. A fuel cell is an energy conversion device that generates electricity and heat by electrochemically combining a gaseous fuel, such as hydrogen, carbon monoxide, or a hydrocarbon, and an oxidant, such as air or oxygen, across an ion-conducting electrolyte. The fuel cell converts chemical energy into electrical energy. A fuel cell generally consists of two electrodes positioned on opposite sides of an electrolyte. The oxidant passes over the oxygen electrode (cathode) while the fuel passes over the fuel electrode (anode), generating electricity, water, and heat.

A SOFC is constructed entirely of solid-state materials, utilizing an ion conductive oxide ceramic as the electrolyte. A conventional electrochemical cell in a SOFC is comprised of an anode and a cathode with an electrolyte disposed therebetween. In a typical SOFC, a fuel flows to the anode where it is oxidized by oxide ions from the electrolyte, producing electrons that are released to the external circuit, and mostly water and carbon dioxide are removed in the fuel flow stream. At the cathode, the oxidant accepts electrons from the external circuit to form oxide ions. The oxide ions migrate across the electrolyte to the anode. The flow of electrons through the external circuit provides for consumable or storable electrical power. However, each individual electrochemical cell generates a relatively small voltage. Higher voltages are attained by electrically connecting a plurality of electrochemical cells in series to form a stack.

The fuel cell stack also includes conduits or manifolds to allow passage of the fuel and oxidant into the stack, and byproducts, as well as excess fuel and oxidant, out of the stack. Generally, oxidant is fed to the structure from a manifold located on one side of the stack, while fuel is provided from a manifold located on an adjacent side of the stack. The fuel and oxidant are generally pumped through the manifolds and introduced to a flow field disposed adjacent to the appropriate electrode. The flow fields that direct the fuel and oxidant to the respective electrodes typically create oxidant and fuel flows across the electrodes that are perpendicular to one another.

The long term successful operation of a fuel cell depends primarily on maintaining structural and chemical stability of fuel cell components during steady state conditions, as well as transient operating conditions such as cold startups and emergency shut downs. The support systems are required to store and control the fuel, compress and control the oxidant and provide thermal energy management. A SOFC can be used in conjunction with a reformer that converts a fuel to hydrogen and carbon monoxide (the reformate) usable by the fuel cell. Three types of reformer technologies are typically employed (steam reformers, dry reformers, and partial oxidation reformers) to convert hydrocarbon fuel (methane, propane, natural gas, gasoline) to hydrogen using water, carbon dioxide, and oxygen, respectfully, with byproducts including carbon dioxide and carbon monoxide, accordingly. These reformers operate at high temperatures (e.g., about 800°C or greater). At lower temperatures, e.g., during start-up, deposition of carbon (or soot) upon the catalyst can adversely affect the reformer efficiency and reduce reformer life. Major requirements for the reformers are rapid start, dynamic response time, fuel conversion efficiency, size, and weight.

Since rapid start-up and shut down cycles are typical in automobile applications, the reformer catalyst bed must be heated rapidly but the air/fuel mixing zone must be carefully controlled in temperature to avoid gas phase reactions in the mixing zone of the reformer system. Particularly when using reactive fuels like gasoline or diesel fuels, gas phase reactions tend to produce lower quality reformate having more soot, and less hydrogen. This proves to be very inefficient because soot build-up can rapidly impair reformer performance as well as components disposed downstream.

US5733675 relates to an electrochemical fuel cell generator comprising a hollow reformer having a closed end and an open end entrance for a reformable fuel mixture to pass to the closed end and then reverse flow and pass back along the hollowed wall to be reformed.

SUMMARY

The drawbacks and disadvantages of the prior art are overcome by the temperature and reaction management system, method for managing the temperature and reaction of fuel in a fuel reformer system. A temperature/reaction management system comprises a reforming zone, and a mat material fluidly coupled to a portion of an inlet of the reforming zone. The method for managing the temperature and reaction of fuel in an energy conversion device comprises dispensing a fuel through a mat material disposed against an inlet of a reformer system. The air/fuel mixture flows through the mat material so that the mixing zone is maintained at a low temperature. The mat material also inhibits the propagation of a flame flowing back into the inlet, which prevents a gas phase reaction prior to entering the reforming zone. The fuel reformer system comprises a reforming zone, a mat material fluidly coupled to the reforming zone, and a mixing zone fluidly coupled to the reformer system.

The above described and other features are exemplified by the following detailed description, drawings, and appended claims.

BRIEF DESCRIPTION OF THE DRAWINGS

Referring now to the Figures, wherein like elements are numbered alike in the several figures:

> Figure 1 is a schematic of a fuel reformer system coupled to a temperature/reaction management system; and
> Figure 2 is a schematic of an energy conversion device employing the reformer system and temperature/reaction management system of Figure 1.

DESCRIPTION OF THE PREFERRED EMBODIMENT

To meet the needs of automobiles, fuel cells need to rapidly start, requiring an immediate source of fuel. Conventional fuels, such as gasoline, need to be reformed into acceptable SOFC fuels, such as hydrogen and carbon monoxide. The reforming process pretreats the fuel for efficient use by the fuel cell system. Since different types of fuel cell systems exist, including tubular or planar, any reference to components of a particular cell configuration are intended to also represent similar components in other cell configurations where applicable.

To facilitate the reaction in a solid oxide fuel cell ("SOFC"), a direct supply of the fuel, such as hydrogen, carbon monoxide, or methane, is preferred. However, concentrated supplies of these fuels are generally expensive and difficult to supply. Therefore, the specific fuel can be supplied by processing a more complex source of the fuel. The fuel utilized in the system is typically chosen based upon the application, expense, availability, and environmental issues relating to the fuel. Possible sources of fuel include conventional fuels such as hydrocarbon fuels, including, but not limited to, conventional liquid fuels, such as gasoline, diesel, ethanol, methanol, kerosene, and others; conventional gaseous fuels, such as natural gas, propane, butane, and others; and alternative fuels, such as hydrogen, biofuels, dimethyl ether, and others; and combinations comprising at least one of the foregoing fuels. The preferred fuel is typically based upon the power density of the engine, with lighter fuels, i.e., those which can be more readily vaporized and/or conventional fuels which are readily available to consumers, generally preferred.

The processing or reforming of hydrocarbon fuels, such as gasoline, is completed to provide a fuel source for rapid start up of the fuel cell as well as protecting the fuel cell by breaking down long chain hydrocarbons and by removing impurities. Fuel reforming can comprise mixing a fuel with air, water, and/or steam in a mixing zone before entering a reforming zone of the reformer system, and converting a hydrocarbon (such as gasoline) or an oxygenated fuel (such as methanol) into hydrogen ($H_2$), byproducts (e.g., carbon monoxide (CO), methane ($CH_4$), inert materials (e.g., nitrogen ($N_2$), carbon dioxide ($CO_2$), and water ($H_2O$)). Common approaches include steam reforming, partial oxidation, and dry reforming.

Steam reforming systems involve the use of a fuel and steam ($H_2O$) that is reacted in heated tubes filled with catalysts to convert the hydrocarbons into principally hydrogen and carbon monoxide. The steam reforming reactions are endothermic, thus the steam reformer reactors are designed to transfer heat into the catalytic process. An example of the steam reforming reaction is as follows:

$$CH_4 + H_2O \rightarrow CO + 3H_2$$

Partial oxidation reformers are based on substoichiometric combustion to achieve the temperatures necessary to reform the hydrocarbon fuel. Decomposition of the fuel to primarily hydrogen and carbon monoxide occurs through thermal reactions at high temperatures of about 700°C to about 1,000°C. Catalysts have been used with partial oxidation systems (catalytic partial oxidation) to promote conversion of various sulfur-free fuels, such as ethanol, into synthesis gas. The use of a catalyst can result in acceleration of the reforming reactions and can provide this effect at lower reaction temperatures than those that would otherwise be required in the absence of a catalyst. An example of the partial oxidation reforming reaction is as follows:

$$CH_4 + \frac{1}{2}O_2 \rightarrow CO + 2H_2$$

Dry reforming involves the creation of hydrogen and carbon monoxide in the absence of water, for example, using carbon dioxide as the oxidant. Dry reforming reactions, like steam reforming reactions, are endothermic processes. An example of the dry reforming reaction is depicted in the following reaction:

$$CH_4 + CO_2 \rightarrow 2CO + 2H_2$$

Practical reformer systems can comprise a combination of these idealized processes. Thus, a combination of air, water or recycled exhaust gas can be used as the oxidant in the fuel reforming process.

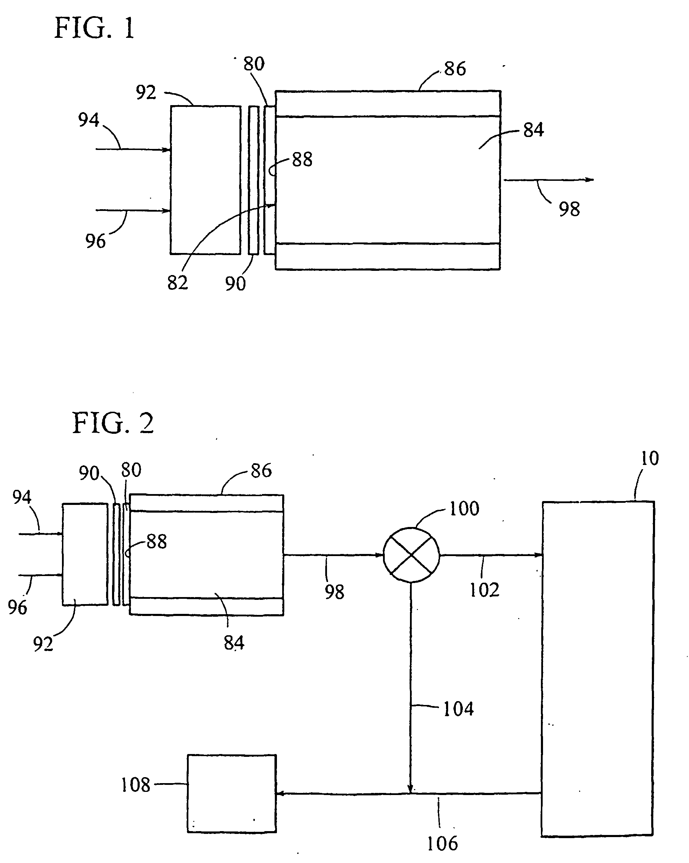

The temperature/reaction management system comprises a mat material 80 disposed in front of the inlet 82 of the reforming catalyst substrate 84 of the reformer system 86 (See Figure 1). The mat material 80 can comprise a piece of material that preferably functions as an insulation material, radiation shield, and filtration device. The mat material 80 also preferably possesses flame-arresting characteristics such as being conductive and able to quench flames, and act as a thermal barrier. The mat material 80 can reduce the likelihood that high temperatures of the reforming zone from heating the incoming gas flow will cause a premature gas phase reaction prior to entering the reformer catalyst substrate thereby enhancing reformer efficiency. The material can have any geometry such as circular, elongated (e.g., oval or oblong, and the like), multi-sided (e.g., triangular, square, trapezoidal, pentagonal, hexagonal, heptagonal), with a geometry resembling, or substantially resembling, the geometry of either the reformer catalyst substrate inlet 82 or cross-sectional geometry of the shell preferred. The material can comprise a single layer, or several layers that can comprise a woven, non-woven perform, mesh, fibrous, cloth, or paperlike material, preferably fabricated using a binder such as a sealing agent, an adhesive, a ceramic binder (e.g., colloidal alumina), combinations comprising at least one of the foregoing. The material can preferably comprise several layers of fibrous material comprising chopped, short, long fibers, with long length fibers preferred, such that the fibers become entangled to impart the structural integrity required to withstand the force exerted by the fuel flow upon the mat material 80. That is the material should be capable of maintaining its structural integrity without individual fibers being dislodged and swept downstream with the fuel flow, while also possessing a sufficient porosity and thickness to attain low fuel flow restriction. Possible materials include cloth, mat like or paper like materials comprising self supporting fibrous material (e.g., ceramic fibers), or fibrous material supported on wax (e.g., ceramic fibers supported on wax or ceramic material), alumina, zirconia, other oxides which are stable in both oxidizing and reducing reaction conditions, combinations comprising at least one of the foregoing materials, having a porosity and pore size sufficient to filter particulate matter while minimally inhibiting gas flow.

Similarly, the thickness of the mat 80 is based upon the desired structural integrity, and fluid flow requirements of the particular application. For example, a thinner material offers less pressure drop and lower parasitic losses within the system. In contrast, a thicker material allows more reactive fuels, such as diesel, to be used. In addition, the thickness of the mat material 80 assists in containing the reaction within the reformer catalyst bed, radiating heat and temperature back into the reformer catalyst, and improving the turn down ratio of the reformer system 86. The turn down ratio is the quantity of reformate that can be reliably produced, or a ratio of the maximum quantity of reformate that can be produced to the minimum amount of time necessary to produce that quantity of reformate. For example, if the desired turn down ratio is about 10:1, then a fuel input flow of 1 gram/second meets the desired turn down ratio, whereas a fuel input flow of about 5 grams/second only produces a turn down ratio of about 2:1 which does not meet the desired ratio. It is preferable to have a slower fuel input flow such as about 1 gram/second so that a greater quantity of fuel can be processed into reformate. Although a gas phase reaction is more likely to occur when the input fuel flow is slow, the mat material 80 can reduce the likelihood that a gas phase reaction occurs. Generally, a thickness of up to about 20 millimeters can be employed, with up to about 10 millimeters preferred, and about 3 millimeters to about 7 millimeters especially preferred, while maintaining acceptable performance.

In order to improve the insulative qualities of the mat 80, the mat 80 preferably comprises a reflective surface 88 facing the fuel flow entering the fuel reformer system. The reflective surface 88 preferably comprises a thermal resistant material, and/or a coating (e.g., a white, opaque, or similar surface) disposed over all or a portion of the surface of the mat material 80, that acts as an effective radiation reflector or radiation barrier to prevent a sharp temperature gradient from forming ahead of the mat material 80, and a premature gas phase reaction. More particularly, the reflective surface 88, which preferably comprises the same composition of the mat material 80, can include alumina, zirconia, silica, magnesia, titania, as well as combinations comprising at least one of the foregoing materials. As such, the mat material 80 also insulates the reformer catalyst substrate 84 from radiation, and can preferably maintain a temperature gradient of about 200°C to about 600°C (dependent upon the reactivity of the fuel) between the inlet and outlet of the mat material 80.

Further thermal management can be attained by disposing an optional secondary flame arrestor 90 against the reflective surface 88 of the mat material 80. Flame arrestors comprise a conductive, metallic material that is disposed at the inlet of a reformer catalyst substrate to quench potential flames that occur due to gas phase reactions. Flame arrestor 90, which preferably has a geometry resembling, or substantially resembling, the geometry of the reformer catalyst substrate inlet 82 and mat material 80, can comprise stainless steel, super alloy, copper, nickel, aluminum, as well as its alloys and combinations comprising at least one of the foregoing materials. The flame arrestor 90,reflective surface 88, and mat material 80 combine to produce an effective thermal barrier to prevent high temperatures of the reforming zone from heating the incoming gas flow, and causing premature gas phase reactions prior to entering the reformer catalyst substrate.

In addition, or as an alternative to the flame arrestor 90 and reflective surface 88, an inert material 92 preferably having a geometry substantially similar to the mat material 80 cross-sectional geometry can be disposed in contact with either the optional flame arrestor 90, reflective surface 88, and/or the mat material 80. The inert material 92, which imparts structural integrity to the mat material 80, preferably comprises a foam, or sponge like material, having a fine porosity that exhibits low restriction to gas flow, and allows time for the evaporation and mixing of any remaining liquid fuel. Possible materials include a ceramic material, polymeric material, and/or metallic material, such as alumina, zirconia, silica, silicon carbide, stainless steel, super alloy, copper, nickel, aluminum, as well as alloys, cermets, oxides, composites, and combinations comprising at least one of the foregoing materials, with alumina and silicon carbide preferred. The inert material 92 can be formed, for example, by depositing silicon carbide on a fugative polymeric material having a skeletal sponge like structure, and firing it to burn off the fugative polymeric material and leave silicon carbide foam.

As described earlier, the mat material 80 is preferably disposed against the inlet 82 of the reformer catalyst substrate 84. The reformer catalyst substrate can comprise any material designed for use in an SOFC environment and having the following characteristics: (1) capable of operating at temperatures up to about 1,000°C; (2) capable of withstanding reducing and oxidizing environments containing, for example, hydrocarbons, hydrogen, carbon monoxide, water, oxygen, sulfur and sulfur compounds, combustion radicals such as H+, OH-; and carbon particulate matter; and (3) having sufficient surface area and structural integrity to support the desired catalyst. Some possible materials include alumina, zirconia, cordierite, silicon carbide, metal (e.g., stainless steel, aluminum), as well as oxides, alloys, cermets and mixtures comprising at least one of the foregoing materials, with alumina based, zirconia based, and mixtures comprising alumina and/or zirconia preferred. These substrates can be in the form of porous glasses, foils, sponges, monoliths. In addition, precious metals, such as rare earth metals (e.g., cerium, lanthanum), alkaline earth metals (e.g., barium), and transition metals and their oxides (e.g., nickel and nickel oxide), can also be added to a reformer catalyst washcoat material in an amount up to about 300 grams per cubic foot of reformer catalyst substrate volume. Alumina and/or zirconia can comprise the majority of the catalyst washcoat upon which the catalyst and additive materials are applied.

Although the reformer catalyst substrate can have any size or geometry, the size and geometry are preferably chosen to optimize the surface area in the given catalytic converter design parameters. The reformer catalyst substrate can have an open cell foam structure, or an extruded honeycomb cell geometry, with the cells being any multi-sided or rounded shape, with substantially square, hexagonal, octagonal or similar geometries preferred due to increased surface area and structural integrity. The reformer catalyst substrate is formed into a cell structure with a plurality of cells arranged in a honeycomb pattern using a foam process, and the like. Disposed on and/or throughout the reformer catalyst substrate can be a catalyst washcoat layer. The catalyst may comprise one or more catalyst materials that are wash coated, imbibed, impregnated, physisorbed, chemisorbed, precipitated, or otherwise applied to the catalyst substrate. Possible catalyst materials include metals, such as platinum, palladium, rhodium, iridium, osmium, ruthenium, tantalum, zirconium, yttrium, cerium, nickel, copper, and oxides, mixtures, and alloys comprising at least one of the foregoing metals, and other conventional catalysts.

Referring now to the example illustrated by Figure 2, steam, water, air and/or recycled exhaust gas, indicated by arrow 94, and fuel, indicated by arrow 96, are mixed together in a mixing zone before flowing through the temperature/reaction management system comprising the optional inert material 92, optional flame arrestor 90, and mat material 80 prior to entering the reformer system 86. In this example, the optional inert material 92 exerts a force in the direction of the fuel flow to support the flame arrestor 90 and mat material 80 against the inlet 82 of the reformer catalyst substrate 84. The optional inert material 92 can also filter and remove liquid droplets and/or particulate-forming matter that may be present in the fuel and/or steam, air and/or water. For purposes of this example, the mat material 80 rests against the entire surface area of the inlet 82, rather than just a portion of the inlet 82. As the fuel flows through the inert material 92, the flame arrestor 90 and mat material 80 will "quench" any premature fuel combustion or flaming. The flame arrestor's thermally resistant composition will extinguish overheated fuel by lowering its operating temperature. As the fuel continues flowing, the fuel can pass through the mat material 80, and make contact with the reflective surface 88 of the mat material 80. The reflective surface 88 can reflect the radiation emanating from the fuel and/or steam, water or air. The reflective surface 88 allows a sharp temperature gradient, e.g., a first temperature, to form at the reformer catalyst substrate inlet 82. This prevents a gas phase reaction, e.g., at a higher second temperature, from occurring before the fuel enters the reformer catalyst substrate 84. This resulting premature gas phase reaction of the fuel will cause coking and soot formation in the fuel flow. This soot can then enter the reformer system 86 and degrade its reformate processing ability and efficiency. The thermal resistant properties of the reflective surface 88 thus prevent coking and soot formation by eliminating the premature gas phase reaction outside the reformer system 86. After the fuel passes through the mat material 80, the fuel passes into the reformer catalyst substrate 84.

In the example illustrated in Figure 2, the reformer system 86 can process the fuel and oxidant inputs into reformate for use with the solid oxide fuel cell 10 ("SOFC 10") of the energy conversion device. Typically, the reformate exits the reformer system 86, using the flow path indicated by arrow 98, and can pass through a reformate control valve 100. The reformate control valve 100 can divert the reformate flow into the SOFC 10, using a flow path indicated by arrow 102, to power the system and/or a waste energy recovery burner system 108, using a flow path indicated by an arrow 104 and an arrow 106, to warm up the system. The SOFC 10 can convert the reformate into electrical energy to power the energy conversion device, or direct the reformate into the waste energy burner system 108 using a flow path indicated by arrow 106.

The mat material combined with a reformer system can produce high quality reformate having a higher concentration of hydrogen, and lower concentration of soot, and other foreign particulate matter resulting from gas phase reactions. At the same time, the mat material acts as a filtration device that prevents foreign matter, such as soot, in the event that soot does form, from entering and degrading the efficiency of the reformer system. Likewise, the mat material combined with an optional flame arrestor, and/or an optional inert foam material, provides an effective thermal and radiation barrier that prevents the fuel flow temperature from increasing, and precipitating a gas phase reaction.

In addition, the combination of the mat material, optional flame arrestor, and/or optional inert material improves the turn down ratio of the reformer system such that a greater quantity of fuel can be processed into reformate. Furthermore, reactive fuels, such as gasoline and diesel fuels, can be reformed successfully at lower turn down ratios. The physical characteristics of the mat material 80 also enhance the turn down ratio. The thickness of the mat material can assist in containing the temperature and heat from the reformer catalyst bed within the reformer, as well as radiate the heat back into the reformer catalyst bed. Without this additional thermal and radiation barrier protection the fuel input flow rate would need to be increased. The resulting faster fuel input flow rate would, in turn, detrimentally impact the turn down ratio of the reformer system and cause an increased pressure drop within the reformer system. In contrast, the combination of the mat material, optional flame arrestor and/or optional inert material also facilitates reforming fuel with a low-pressure drop, such as a decrease of a few percent of the entire system, rather than a pressure increase when gas phase reactions occur.

**Claims**

1.   A temperature/reaction management system, comprising:

a fuel reforming zone of a reformer system (86); and
a mat material (80) in fluid communication with a portion of an inlet of said reforming zone.

2.   The system of Claim 1, further comprising a flame arrestor (90) fluidly coupled to said mat material (80), and opposite said reforming zone.

3.   The system of Claim 1, further comprising an inert material (92) fluidly coupled to said mat material (80), and opposite said reforming zone.

4.   The system of Claim 1, further comprising an inert material (92) fluidly coupled to a flame arrestor (90), and opposite said mat material (80).

5.   The system of Claim 1, further comprising an inert material (92) fluidly coupled to said mat material (80), and opposite said reforming zone.

6.   The system of Claim 1, wherein said mat material (80) further comprises a type of material selected from the group consisting of woven, mesh like, fibrous, cloth like, paper like, and combinations comprising at least one of the foregoing types of materials.

7.   The reformer system of Claim 1, wherein said mat material (80) further comprises a single layer or a plurality of layers of material.

**8.** The system of Claim 7, wherein said plurality of layers of material further are held together using a binder, wherein said binder further comprises a binder selected from the group consisting of a sealing agent, an adhesive, a ceramic substance, and combinations comprising at least one of the foregoing binders.

**9.** The system of Claim 1, wherein said mat material (80) further comprises a reflective surface (88).

**10.** The system of Claim 9, wherein said reflective surface (88) further comprises a coating, wherein said coating further comprises a white, opaque material.

**11.** The system of Claim 1, wherein said mat material further comprises said mat material (80) is disposed against an inlet (82) of a reformer catalyst substrate (84) of said reforming zone.

**12.** A method for managing the temperature and reaction of fuel in an energy conversion device, comprising:

dispensing an air/fuel mixture through a mat material (80) disposed against an inlet (82) of a reformer system (86);
maintaining a first temperature before said inlet (82) that is less than a second temperature of a gas phase reaction;
inhibiting the propagation of a flame into said reformer system (86); and
dispensing said fuel into said reformer system (86).

**13.** The method of Claim 12, further comprising dispensing said fuel through a flame arrestor fluidly coupled to said mat material (80).

**14.** The method of Claim 13, further comprising dispensing said fuel through an inert material (92) fluidly coupled to said flame arrestor (90).

**15.** The method of Claim 12, further comprising dispensing said fuel through an inert material (92) fluidly coupled to said mat material (80).

**16.** A fuel reformer system, comprising:

a reforming zone;
a mat material (80) fluidly coupled to said reforming zone; and
a mixing zone fluidly coupled to said reforming zone.

**17.** The method of Claim 16, further comprising dispensing said fuel through a flame arrestor (90) fluidly coupled to said mat material (80).

**18.** The method of Claim 16, further comprising dispensing said fuel through an inert material (92) fluidly coupled to said flame arrestor (90).

**19.** The method of Claim 16, further comprising dispensing said fuel through an inert material (92) fluidly coupled to said mat material (80).

**Patentansprüche**

**1.** Temperatur- / Reaktionsmanagementsystem umfassend:

eine Kraftstoff-Reformierungszone eines Reformersystems (86); und
ein Mattenmaterial (80) in fluidmäßiger Verbindung mit einem Abschnitt eines Einlasses der Reformierungszone.

**2.** System nach Anspruch 1, ferner umfassend eine Flammensperre (90), die mit dem Mattenmaterial (80) fluidmäßig gekoppelt ist und der Reformierungszone gegenüberliegt.

**3.** System nach Anspruch 1, ferner umfassend ein Inertmaterial (92), das mit dem Mattenmaterial (80) fluidmäßig gekoppelt ist und der Reformierungszone gegenüberliegt.

**4.** System nach Anspruch 1, ferner umfassend ein Inertmaterial (92), das mit einer Flammensperre (90) fluidmäßig gekoppelt ist und dem Mattenmaterial (80) gegenüberliegt.

**5.** System nach Anspruch 1, ferner umfassend ein Inertmaterial (92), das mit dem Mattenmaterial (80) fluidmäßig gekoppelt ist und der Reformierungszone gegenüberliegt.

**6.** System nach Anspruch 1, wobei das Mattenmaterial (80) ferner einen Materialtyp umfasst, der aus der Gruppe bestehend aus gewobenen, siebartigen, faserigen, stoffartigen, papierartigen Materialtypen und Kombinationen, die zumindest einen der vorhergehenden Materialtypen umfassen, ausgewählt ist.

**7.** Reformersystem nach Anspruch 1, wobei das Mattenmaterial (80) ferner eine Einzellage oder eine Vielzahl von Lagen von Material umfasst/en.

**8.** System nach Anspruch 7, wobei die Vielzahl von Lagen von Material ferner mit Hilfe eines Bindemittels zusammengehalten wird, wobei das Bindemittel ferner ein Bindemittel umfasst, das aus der Gruppe bestehend aus einem Dichtungsmittel, einem Kleber, einer Keramiksubstanz und Kombinationen, die zumindest eines der vorhergehenden Bindemittel umfassen, ausgewählt ist.

9.  System nach Anspruch 1, wobei das Mattenmaterial (80) ferner eine reflektierende Oberfläche (88) umfasst.

10. System nach Anspruch 9, wobei die reflektierende Oberfläche (88) ferner eine Beschichtung umfasst, wobei die Beschichtung ferner ein weißes lichtundurchlässiges Material umfasst.

11. System nach Anspruch 1, wobei das Mattenmaterial ferner umfasst, dass das Mattenmaterial (80) gegen einen Einlass (82) eines Reformer-Katalysatorsubstrats (84) der Reformierungszone angeordnet ist.

12. Verfahren zum Managen der Temperatur und Reaktion eines Kraftstoffes in einer Energieumwandlungsvorrichtung umfassend die Schritte:

> Abgeben eines Luft- / Kraftstoff-Gemisches durch ein Mattenmaterial (80), das gegen einen Einlass (82) eines Reformersystems (86) angeordnet ist;
> Halten einer ersten Temperatur vor dem Einlass (82), die niedriger als eine zweite Temperatur einer Gasphasenreaktion ist;
> Verhindern der Ausbreitung einer Flamme in das Reformersystem (86) hinein; und
> Abgeben des Kraftstoffes in das Reformersystem (86) hinein.

13. Verfahren nach Anspruch 12, ferner umfassend den Schritt: Abgeben des Kraftstoffes durch eine Flammensperre (90), die mit dem Mattenmaterial (80) fluidmäßig gekoppelt ist.

14. Verfahren nach Anspruch 13, ferner umfassend den Schritt: Abgeben des Kraftstoffes durch ein Inertmaterial (92), das mit der Flammensperre (90) fluidmäßig gekoppelt ist.

15. Verfahren nach Anspruch 12, ferner umfassend den Schritt: Abgeben des Kraftstoffes durch ein Inertmaterial (92), das mit dem Mattenmaterial (80) fluidmäßig gekoppelt ist.

16. Kraftstoff-Reformersystem, umfassend:

> eine Reformierungszone;
> ein Mattenmaterial (80), das mit der Reformierungszone fluidmäßig gekoppelt ist; und
> eine Mischzone, die mit der Reformierungszone fluidmäßig gekoppelt ist.

17. Verfahren nach Anspruch 16, ferner umfassend den Schritt: Abgeben des Kraftstoffes durch eine Flammensperre (90), die mit dem Mattenmaterial (80) fluidmäßig gekoppelt ist.

18. Verfahren nach Anspruch 16, ferner umfassend den Schritt: Abgeben des Kraftstoffes durch ein Inertmaterial (92), das mit der Flammensperre (90) fluidmäßig gekoppelt ist.

19. Verfahren nach Anspruch 16, ferner umfassend den Schritt: Abgeben des Kraftstoffes durch ein Inertmaterial (92), das mit dem Mattenmaterial (80) fluidmäßig gekoppelt ist.

**Revendications**

1.  Système de contrôle de la température/des conditions de réaction, comprenant :

> une zone de reformage de carburant d'un système de reformeur (86) ; et
> un matériau de mat (80) en communication fluidique avec une portion d'une entrée de ladite zone de reformage.

2.  Système selon la revendication 1, comprenant en outre un pare-flammes (90) couplé de manière fluidique audit matériau de mat (80), et à l'opposé de ladite zone de reformage.

3.  Système selon la revendication 1, comprenant en outre un matériau inerte (92) couplé de manière fluidique audit matériau de mat (80), et à l'opposé de ladite zone de reformage.

4.  Système selon la revendication 1, comprenant en outre un matériau inerte (92) couplé de manière fluidique à un pare-flammes (90), et à l'opposé dudit matériau de mat (80).

5.  Système selon la revendication 1, comprenant en outre un matériau inerte (92) couplé de manière fluidique audit matériau de mat (80), et à l'opposé de ladite zone de reformage.

6.  Système selon la revendication 1, dans lequel ledit matériau de mat (80) comprend en outre un type de matériau sélectionné dans le groupe constitué par des matériaux tissés, à mailles, fibreux, de type toile, de type papier, et des combinaisons comprenant au moins l'un des types de matériaux précédents.

7.  Système de reformeur selon la revendication 1, dans lequel ledit matériau de mat (80) comprend en outre une seule couche ou une pluralité de couches de matériau.

8. Système selon la revendication 7, dans lequel ladite pluralité de couches de matériau sont en outre maintenues ensemble à l'aide d'un liant, dans lequel ledit liant comprend en outre un liant sélectionné dans le groupe constitué par un agent d'étanchéité, un adhésif, une substance céramique, et des combinaisons comprenant au moins l'un des liants précédents.

9. Système selon la revendication 1, dans lequel ledit matériau de mat (80) comprend en outre une surface réflectrice (88).

10. Système selon la revendication 9, dans lequel ladite surface réflective (88) comprend en outre un revêtement, dans lequel ledit revêtement comprend en outre un matériau blanc opaque.

11. Système selon la revendication 1, dans lequel ledit matériau de mat (80) est disposé contre une entrée (82) d'un substrat catalyseur de reformeur (84) de ladite zone de reformage.

12. Procédé de contrôle de la température et des conditions de réaction du carburant dans un dispositif de conversion d'énergie, comprenant :

   la distribution d'un mélange air/carburant à travers un matériau de mat (80) disposé contre une entrée (82) d'un système de reformeur (86) ;
   le maintien d'une première température avant ladite entrée (82) qui est inférieure à une seconde température d'une réaction en phase gazeuse ;
   l'inhibition de la propagation d'une flamme dans ledit système de reformeur (86) ; et
   la distribution dudit carburant dans ledit système de reformeur (86).

13. Procédé selon la revendication 12, comprenant en outre la distribution dudit carburant à travers un pare-flammes (90) couplé de manière fluidique audit matériau de mat (80).

14. Procédé selon la revendication 13, comprenant en outre la distribution dudit carburant à travers un matériau inerte (92) couplé de manière fluidique audit pare-flammes (90).

15. Procédé selon la revendication 12, comprenant en outre la distribution dudit carburant à travers un matériau inerte (92) couplé de manière fluidique audit matériau de mat (80).

16. Système de reformeur de carburant, comprenant :

   une zone de reformage ;

   un matériau de mat (80) couplé de manière fluidique à ladite zone de reformage ; et
   une zone de mélange couplée de manière fluidique à ladite zone de reformage.

17. Procédé selon la revendication 16, comprenant en outre la distribution dudit carburant à travers un pare-flammes (90) couplé de manière fluidique audit matériau de mat (80).

18. Procédé selon la revendication 16, comprenant en outre la distribution dudit carburant à travers un matériau inerte (92) couplé de manière fluidique audit pare-flammes (90).

19. Procédé selon la revendication 16, comprenant en outre la distribution dudit carburant à travers un matériau inerte (92) couplé de manière fluidique audit matériau de mat (80).

FIG. 1

FIG. 2